# FASCICULE DE BREVET EUROPEEN

(11) **EP 4 543 738 B1**
(45) Date de publication et mention de la délivrance du brevet: **27.05.2026**
(21) Numéro de dépôt: 23731599.9
(22) Date de dépôt: 07.06.2023
(51) Int. Cl.: B62D 33/027, B62D 25/24, B62D 25/20

(54) **STRUCTURE ARRIÈRE DE CAISSE D'UN VÉHICULE COMPORTANT UN PORTILLON**
HECKKAROSSERIESTRUKTUR EINES FAHRZEUGS MIT EINER KLAPPE
REAR BODY STRUCTURE OF A VEHICLE COMPRISING A GATE

(30) Priorité: 23.06.2022 FR 2206213
(43) Date de publication de la demande: 30.04.2025
(73) Titulaire: Renault s.a.s, 92100 Boulogne Billancourt (FR)
(72) Inventeur: GIRARDI, Lionel, 78280 GUYANCOURT (FR); GUERIN, Jean-Pierre, 78280 GUYANCOURT (FR)
(86) Numéro de dépôt international: PCT/EP2023/065184
(87) Numéro de publication internationale: WO 2023/247180

(56) Documents cités:
- EP-A1- 0 410 917
- DE-A1- 102005 005 769
- US-A- 5 040 843

## Description

La présente invention se rapporte au domaine automobile et concerne plus précisément une structure arrière de caisse de véhicule avec un portillon. L'invention concerne également un véhicule, notamment un véhicule utilitaire, comportant une telle structure de caisse. Le document EP 0 410 917 A1 divulgue une structure arrière selon le préambule de la revendication 1.

La plupart des portillons de véhicule, notamment les portillons arrière, utilisent des charnières. Le portillon arrière s'ouvre donc par une rotation du portillon autour d'un axe passant par ses charnières et disposé sur la face arrière du véhicule, de manière adjacente à l'ouverture donnant accès à l'espace de chargement du véhicule. Le portillon ouvert peut donc gêner lors du chargement du véhicule. Par ailleurs, les charnières cassent souvent les lignes du véhicule et nuisent à son esthétique.

La présente invention fournit une structure arrière de caisse pour véhicule, et un véhicule équipé d'une telle structure arrière, permettant de pallier au moins en partie les inconvénients de l'art antérieur.

A cette fin, l'invention propose une structure arrière de caisse d'un véhicule, la structure comportant au moins :
- deux parois se faisant face et dont au moins une comprend un moyen de guidage,
- au moins un bras d'articulation,
- un portillon monté mobile par rapport aux deux parois par l'intermédiaire du bras d'articulation, le portillon étant apte à fermer un espace compris entre les parois,
la structure étant caractérisée en ce que le moyen de guidage comporte au moins deux chemins de came, le bras d'articulation comportant deux cames solidaires du bras d'articulation, agencées chacune dans un chemin de came différent des deux chemins de came, les deux chemins de came comportant chacun une première portion et une deuxième portion inclinée par rapport à la première portion, les premières portions des chemins de came étant parallèles l'une par rapport à l'autre, les deuxièmes portions des chemins de came étant inclinées en sens contraire l'une par rapport à l'autre.

Grâce à l'invention, une translation initiale du portillon est opérée par le portillon lorsque le bras d'articulation suit les premières portions des chemins de came et décale le portillon des deux parois tout en le maintenant face à l'espace ménagé entre les deux parois. Cette translation est suivie d'un mouvement dégageant le portillon latéralement par rapport à l'espace, tout en le maintenant entre deux plans d'extension principale correspondant chacun à une paroi et les prolongeant. Le portillon réalise alors un mouvement combinant une translation et une rotation et est disposé soit au-dessus d'une bouche d'accès à l'espace, soit en-dessous de celle-ci. Ce mouvement est opéré par le portillon lorsque le bras d'articulation suit les deuxièmes portions des chemins de came. En effet, les deuxièmes portions étant parcourues en même temps par deux cames du bras d'articulation, avec les directions d'extension principale de ces deuxièmes portions qui ne sont pas parallèles, le portillon ne se contente pas d'effectuer une translation pour dégager l'espace entre les deux parois, mais tourne sur lui-même, sans utiliser de charnières.

Préférentiellement, les premières portions et les deuxièmes portions s'étendent majoritairement le long de segments de droite. Cela permet un maniement plus facile du portillon à l'ouverture.

Avantageusement, le bras d'articulation comporte un bras principal s'étendant orthogonalement par rapport au portillon et un bras d'extrémité incliné par rapport au bras principal, chaque extrémité du bras d'extrémité étant porteuse d'une came du bras d'articulation. Par « orthogonalement », on entend sensiblement orthogonalement ou strictement orthogonalement. Une direction d'extension principale du bras principal est donc orthogonale au plan d'extension principal du portillon, avec une tolérance par exemple de 5 degrés d'inclinaison autour de cette orthogonalité. Le bras principal est donc fixé à une de ses extrémités au portillon et à l'autre de ses extrémités au bras d'extrémité. Le bras d'articulation présente donc un profil dont la géométrie est sensiblement en col de cygne ce qui permet au portillon lorsqu'il s'ouvre, de contourner un plancher ou un panneau de chargement de la structure arrière de caisse, tout en restant à proximité de celui-ci en position d'ouverture. Cela réduit donc l'encombrement du portillon en position d'ouverture et facilite l'accès à l'espace.

Plus précisément, la deuxième portion d'un premier chemin de came desdits chemins de came est inclinée par rapport à la première portion du premier chemin de came suivant un angle aigu mesuré dans le sens horaire, la deuxième portion d'un second chemin de came desdits chemins de came étant inclinée par rapport à la première portion du second chemin de came suivant le même angle aigu mesuré dans le sens anti-horaire. Ces angles aigus sont mesurés entre des premières droites le long desquelles s'inscrivent majoritairement les premières portions et des secondes droites le long desquelles s'inscrivent majoritairement les deuxièmes portions.

Préférentiellement, les chemins de cames sont des rainures et les cames sont des galets ou des roulements coulissants dans les rainures. Cette réalisation de l'invention a l'avantage de la simplicité.

Les chemins de cames s'inscrivent préférentiellement dans un même plan, ce qui réduit l'encombrement du système d'articulation. Ce plan est avantageusement perpendiculaire à un plan dans lequel s'inscrit majoritairement le plancher de la structure arrière.

Préférentiellement, le portillon comporte deux bras d'articulation, chaque paroi comportant un moyen de guidage d'un bras d'articulation distinct parmi les deux bras d'articulation, les chemins de came du moyen de guidage de chaque paroi étant formés dans une platine, les platines de chaque paroi de la structure arrière de caisse étant disposées parallèlement l'une par rapport à l'autre. Cette réalisation avec deux bras d'articulation, avec ou sans platines, apporte de la stabilité au système d'ouverture du portillon.

La structure de caisse selon l'invention comporte préférentiellement au moins un équilibreur dont une première extrémité est solidaire de la paroi et une seconde extrémité est solidaire du bras d'articulation. La seconde extrémité est par exemple fixée sur le coude du bras d'articulation reliant le bras principal et le bras d'extrémité du bras d'articulation. Un équilibreur pour chaque bras d'articulation est par exemple utilisé lorsque le portillon comporte deux bras d'articulation.

L'invention concerne aussi un véhicule comportant une structure arrière de caisse selon l'invention, le véhicule comportant un plancher bordé par lesdites parois et par ledit portillon, le véhicule comportant en outre un panneau de chargement parallèle au plancher et rapporté sur lesdites parois, le portillon étant apte à dégager un accès à l'espace entre le panneau de chargement et le plancher par un premier mouvement de translation dans une direction parallèle au plancher puis par un deuxième mouvement amenant le portillon au-dessus d'une surface inférieure du panneau de chargement ou au-dessous d'une surface supérieure du plancher.

Le véhicule selon l'invention est par exemple un véhicule utilitaire comportant une cabine et une zone arrière compartimentée. La zone arrière comporte notamment ledit espace entre le plancher et le panneau de chargement, qui peut être utilisé car sécurisé grâce au portillon, et une zone de chargement au-dessus du panneau de chargement, la zone de chargement étant ouverte ou fermée. Cela permet de rentabiliser un espace entre le plancher et le panneau de chargement, le panneau de chargement ne pouvant être placé très bas c'est-à-dire au plus près du châssis du véhicule, pour une utilisation intensive de la zone de chargement. En effet, les charges disposées sur le panneau de chargement doivent être disposées assez hautes pour éviter l'apparition de lombalgies à l'utilisateur du véhicule utilitaire.

Avantageusement, le plancher comporte un rail apte à protéger le moyen de guidage et le bras d'articulation de la structure arrière de caisse lors d'un chargement dudit espace. Le plancher comporte de préférence deux rails, à côté de chaque paroi comportant un moyen de guidage, pour protéger à la fois les bras d'articulation et les équilibreurs. Ces rails peuvent également guider le chargement d'objets encombrants dans l'espace laissé libre entre le plancher et le panneau de chargement. Le rail tel que décrit ici peut donc remplir une fonction de protection mais également une fonction de guidage.

Avantageusement, le panneau de chargement comporte des éléments d'assemblage et de verrouillage aptes à recevoir et fixer un caisson de chargement amovible sur le panneau de chargement. Le panneau de chargement est par exemple vissé sur les parois, et spécifique à un type de caisson de chargement. Le véhicule peut donc être facilement adapté à un autre type de caisson de chargement en vissant un autre panneau de chargement sur les parois du véhicule.

D'autres caractéristiques et avantages de l'invention apparaîtront encore au travers de la description qui suit d'une part, et de plusieurs exemples de réalisation donnés à titre indicatif et non limitatif en référence aux dessins schématiques annexés d'autre part, sur lesquels :
[fig 1] illustre un véhicule selon l'invention, dans un mode préféré de réalisation de l'invention,
[fig 2] illustre le véhicule de la figure 1 avec un caisson de chargement,
[fig 3] illustre un moyen de guidage qui équipe une paroi d'un véhicule selon l'invention,
[fig 4] illustre un bras d'articulation d'un portillon d'un véhicule selon l'invention,
[fig 5] illustre une structure arrière de caisse selon l'invention, avec un portillon en position fermée,
[fig 6] illustre la structure arrière de caisse de la figure 5, avec un portillon en position intermédiaire d'ouverture,
[fig 7] illustre la structure arrière de caisse de la figure 6, avec un portillon en position ouverte.

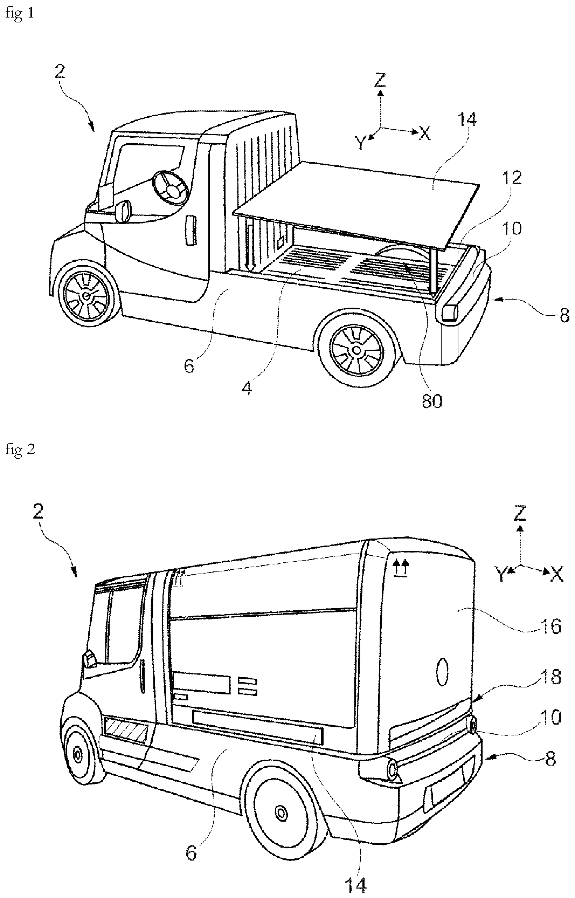

Selon un mode de réalisation de l'invention, un véhicule 2 selon l'invention, représenté figure 1, comporte une cabine, et une structure arrière de caisse elle-même comportant un plancher 4, deux parois 6 et 12 latérales au véhicule et un bouclier arrière 8 comportant un portillon 10. Le véhicule 2 est par exemple un véhicule utilitaire et comporte un panneau de chargement 14 rapporté par vissage sur les parois latérales 6 et 12. En variante, le panneau de chargement est fixé autrement que par des vis sur les parois de la structure arrière de caisse.

Le véhicule s'étend longitudinalement selon une direction horizontale X, les parois 6 et 12 s'étendent selon la direction horizontale X et une direction verticale Z, le portillon 10 s'étend selon la direction verticale Z et une direction transversale Y, orthogonale aux directions horizontale X et verticale Z.

Le portillon 10 permet d'accéder à un espace de chargement 80 laissé libre entre le panneau de chargement 14 et le plancher 4. En variante de réalisation, le portillon est placé entre une paroi de la cabine et le bouclier arrière. Bien sûr, l'invention est de plus réalisable sur un véhicule non utilitaire, le panneau de chargement pouvant être remplacé par le pavillon du véhicule non utilitaire, par exemple. Dans ce cas le portillon 10 constitue le hayon de ce véhicule.

Le véhicule 2 selon l'invention comporte un caisson de chargement 16 fixé sur le panneau de chargement 14 par des moyens 18 d'assemblage et de verrouillage du caisson de chargement 16 sur le panneau de chargement 14. Ces moyens 18 sont par exemple des moyens quarts de tour activables électriquement. Le positionnement du caisson de chargement 16 sur le panneau de chargement 14 se fait par exemple au moyen d'un chariot élévateur dont les fourches sont insérables entre le panneau de chargement 14 et la surface inférieure du caisson de chargement 16. En effet, les moyens 18 d'assemblage et de verrouillage sont positionnés sur des coins du caisson de chargement 16 et du panneau de chargement 14, de sorte à laisser un espace entre le caisson de chargement 16 et le panneau de chargement 14, cet espace permettant l'insertion de fourches d'un chariot élévateur.

Le portillon 10 est monté mobile sur les parois 6 et 12 par l'intermédiaire de deux bras d'articulation, chacun des deux bras d'articulation comportant une extrémité fixée solidairement au portillon 10 et une extrémité opposée montée mobile par rapport à une des parois 6 ou 12.

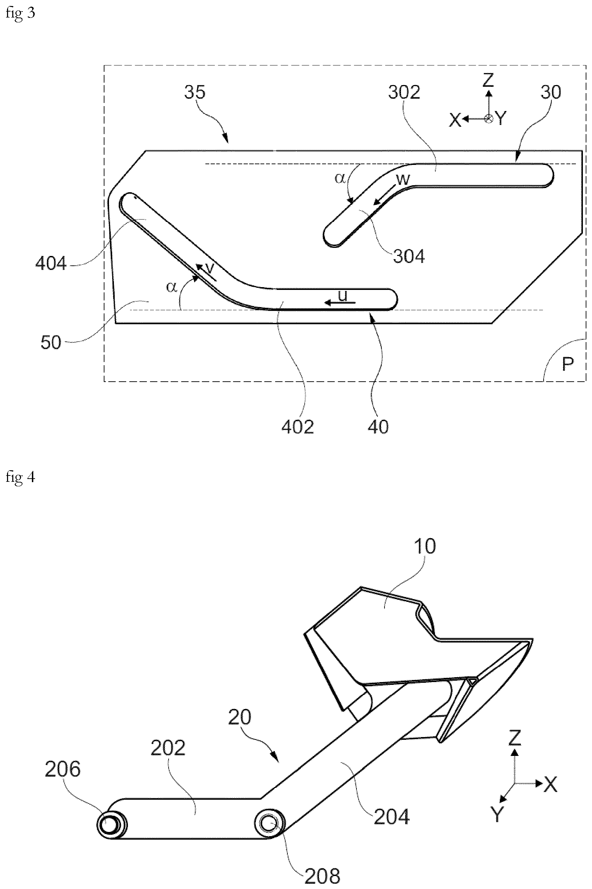

Chaque paroi 6, 12 comporte sur son flanc du côté de l'espace 80 de chargement, une platine 50 représentée sur la figure 3, vissée sur la structure arrière de caisse et comportant un moyen de guidage 35 composé de deux chemins de came 30 et 40, permettant de guider un bras d'articulation du portillon 10, lors de l'ouverture ou de la fermeture de celui-ci.

La platine 50 est disposée dans un plan P, parallèle à la direction X longitudinale par rapport au véhicule 2 et à la direction Z verticale par rapport au véhicule 2.

Un seul bras d'articulation 20 est représenté sur les figures 4, 5 et 7 pour plus de visibilité, mais l'invention trouve une application particulière quand la structure arrière de caisse comprend deux moyens de guidage 35 et deux bras d'articulation 20.

Pour simplifier, on ne décrit que le moyen de guidage 35 associé à la paroi 6 et au bras d'articulation 20, la paroi 12 comportant néanmoins un moyen de guidage 35 similaire à celui de la paroi 6, guidant un bras d'articulation similaire au bras d'articulation 20. Ce moyen de guidage et ce bras d'articulation similaires sont disposés symétriquement au moyen de guidage de la paroi 6 et au bras d'articulation 20 par rapport à un plan vertical séparant longitudinalement en deux le véhicule 2.

Le bras d'articulation 20 représenté sur la figure 4 comporte un bras principal 204 fixé à une de ses extrémités solidairement au portillon 10, par exemple vissé au portillon 10. Le bras principal 204 s'étend notamment orthogonalement au plan d'extension principal du portillon 10 jusqu' à un coude duquel s'étend un bras d'extrémité 202 du bras d'articulation 20. Le bras d'articulation 20 est découpé dans une tôle plane et le bras d'extrémité 202 forme un angle obtus avec le bras principal 204 de sorte à donner au bras principal 20 un profil sensiblement en col de cygne.

Une première came 208 est fixée à l'extrémité du bras d'extrémité 202 qui se trouve au niveau du coude du bras d'articulation 20 et une deuxième came 206 est fixée à l'autre extrémité du bras d'extrémité 202. Les cames 208 et 206 sont des galets montés en rotation sur des tiges orthogonales au plan d'extension principale du bras d'articulation 20, ou des roulements montés sur le bras d'articulation 20.

Comme représenté sur la figure 3, la première came 208 est montée coulissante dans un premier chemin de came 40, ici une rainure dans la platine 50, et la deuxième came 206 est montée coulissante dans un deuxième chemin de came 30, ici une autre rainure dans la platine 50. En variante, les premier et deuxième chemins de came 40 et 30 sont des gaines fixées à la paroi 6.

Le premier chemin de came 40 proximal au portillon 10 par rapport au deuxième chemin de came 30, comporte une première portion 402 s'étendant de manière rectiligne suivant une première direction u, parallèle à la direction horizontale X, et une deuxième portion 404 qui s'étend majoritairement le long d'une seconde direction v inclinée d'un angle aigu α dans le sens horaire, par rapport à la première direction u. La deuxième portion 404 prolonge la première portion 402 au niveau d'un coude reliant une extrémité de la deuxième portion 404 à une extrémité de la première portion 402. L'autre extrémité de la deuxième portion 404 forme une butée du premier chemin de came 40 et l'autre extrémité de la première portion 402 forme une autre butée du premier chemin de came 40. La deuxième portion 404 est proximale au portillon 10 par rapport à la première portion 402.

Le deuxième chemin de came 30 comporte également une première portion 302 s'étendant de manière rectiligne suivant la direction u, et une deuxième portion 304 s'étendant le long d'une direction w inclinée d'un angle aigu α dans le sens anti-horaire par rapport à la direction u. La deuxième portion 304 prolonge la première portion 302 au niveau d'un coude reliant une extrémité de la deuxième portion 304 à une extrémité de la première portion 302. L'autre extrémité de la deuxième portion 304 forme une butée du deuxième chemin de came 30, et l'autre extrémité de la première portion 302 forme une autre butée du deuxième chemin de came 30. La deuxième portion 304 est proximale au portillon 10 par rapport à la première portion 302.

La deuxième portion 304 du deuxième chemin de came 30 est placée au-dessus de la première portion 402 du premier chemin de came 40, selon la direction verticale Z. Bien sûr, les chemins de came 30 et 40 peuvent être disposés différemment dès lors que leurs dispositions permettent aux deux cames 206 et 208 de pouvoir suivre les chemins de came 30 et 40 concomitamment, la distance entre les deux cames 206 et 208 étant fixe. Par exemple, le deuxième chemin de came 30 peut-être proximal au portillon tandis que le premier chemin de came 40 est distal par rapport au portillon. Dans cette variante, le bras d'articulation, qui se déplace dans ces chemins de came, est coudé en sens inverse de la courbure du bras d'articulation 20 de la variante illustrée aux figures 3 à 7, pour permettre d'ouvrir le portillon de sorte qu'il soit positionné plus bas que le plancher 4, en position ouverte.

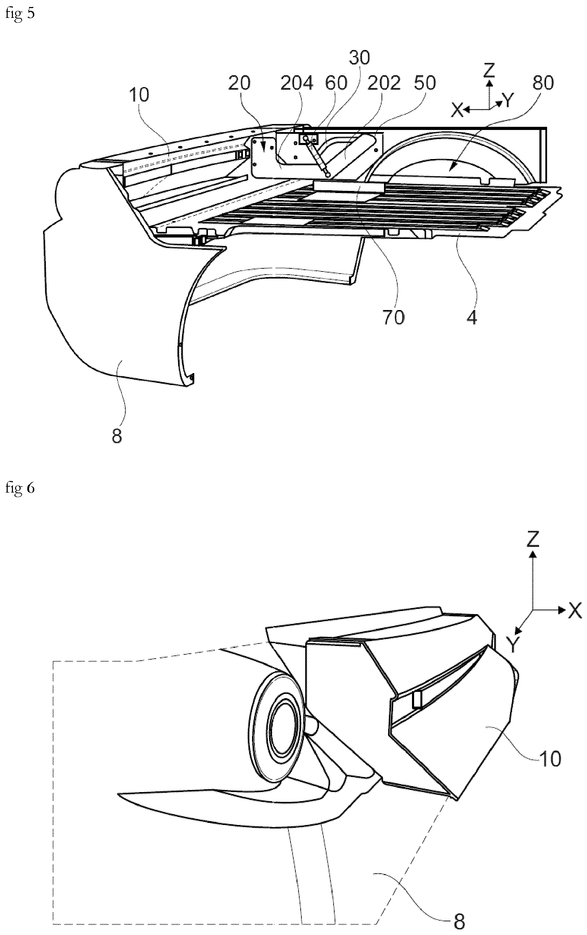

Lorsque le portillon 10 est en position fermée, les cames 206 et 208 sont positionnées respectivement au voisinage de la butée du deuxième chemin de came 30 qui est distale au portillon et au voisinage de la butée du premier chemin de came 40 qui est distale au portillon, comme représenté sur la figure 5.

Lorsqu'un utilisateur du véhicule 2 tire le portillon 10, par l'intermédiaire de poignées situées sur une surface supérieure du portillon 10 parallèle au plancher 4, les cames 206 et 208 suivent respectivement les premières portions 302 et 402 des chemins de came 30, 40 jusqu'aux coudes de chacun des chemins de came 30 et 40. Cette course des cames 206 et 208 opère une translation du portillon 10 le long d'une direction parallèle à la direction longitudinale X du véhicule, éloignant le portillon 10 de l'espace 80 de rangement, tout en le maintenant face à cet espace, comme représenté sur la figure 6.

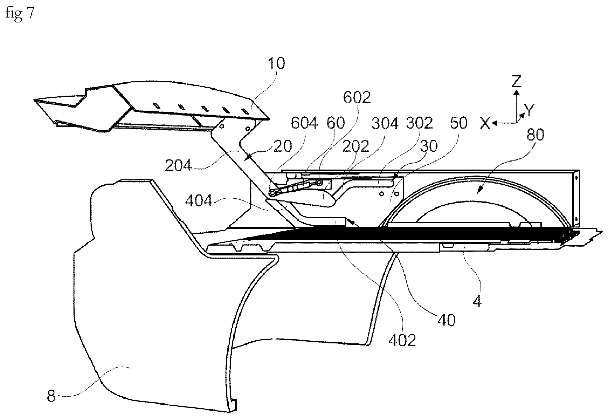

Puis, l'utilisateur continuant à tirer le portillon 10, les cames 206 et 208 suivent les deuxièmes portions respectives 302 et 402 des chemins de came 30, 40 jusqu'aux butées proximales au portillon 10 des chemins de came respectifs 30 et 40. Ce déplacement opère un lever du portillon 10 tout en le faisant tourner d'environ un quart de tour sur lui-même, cette rotation s'effectuant suivant un axe de rotation parallèle à la direction transversale Y de la structure arrière de caisse. Selon l'invention, cet axe de rotation se déplace en translatant le long d'une droite de composante longitudinale et verticale. Ce déplacement amène le portillon 10 dans la position illustrée en figure 7.

Ainsi, le portillon 10 est amené au-dessus du panneau de chargement 14 tout en restant à proximité de celui-ci. L'encombrement de l'ouverture du portillon 10 est donc réduit par rapport à une ouverture classique de portillon arrière de véhicule.

Afin de maintenir le portillon 10 en position ouverte, un équilibreur 60, représenté figures 5 et 7, et qui peut par exemple prendre la forme d'un vérin, est disposé entre le bras d'articulation 20 et la paroi 6. Plus précisément, une extrémité 602 de l'équilibreur 60 est fixée sur la paroi 6 et l'autre extrémité 604 de l'équilibreur 60 est fixée au niveau du coude du bras d'articulation 20.

Deux rails 70 sont fixés de part et d'autre du plancher 4 près des parois 6 et 12, en étant notamment vissés dans le plancher 4. Ces rails latéraux 70 sont orientés chacun parallèlement à la direction longitudinale X, de manière à protéger, lors du chargement ou du déchargement de l'espace 80 de rangement, le système d'ouverture du portillon, c'est-à-dire les chemins de came 30 et 40 des parois 6 et 12, les platines 50 comportant les chemins de came 30, 40 quand l'invention en est pourvue, les équilibreurs 60et les deux bras d'articulation du portillon 10.

## Revendications

1. Structure arrière de caisse d'un véhicule (2), la structure comportant au moins :
- deux parois (6, 12) se faisant face et dont au moins une comprend un moyen de guidage (35),
- au moins un bras d'articulation (20),
- un portillon (10) monté mobile par rapport aux deux parois (6, 12) par l'intermédiaire du bras d'articulation (20), le portillon (10) étant apte à fermer un espace (80) compris entre les parois (6, 12),
la structure étant **caractérisée en ce que** le moyen de guidage (35) comporte au moins deux chemins de came (30, 40), le bras d'articulation (20) comportant deux cames (206, 208) solidaires du bras d'articulation (20), agencées chacune dans un chemin de came différent des deux chemins de came (30, 40), les deux chemins de came (30, 40) comportant chacun une première portion (402, 302) et une deuxième portion (404, 304) inclinée par rapport à la première portion (402, 302), les premières portions (402, 302) des chemins de came (30, 40) étant parallèles l'une par rapport à l'autre, les deuxièmes portions (404, 304) des chemins de came (30, 40) étant inclinées en sens contraire l'une par rapport à l'autre.

2. Structure arrière de caisse selon la revendication 1, dans laquelle les premières portions (402, 302) et les deuxièmes portions (404, 304) s'étendent majoritairement le long de segments de droite.

3. Structure arrière de caisse selon la revendication 1 ou 2, dans laquelle le bras d'articulation (20) comporte un bras principal (204) s'étendant orthogonalement par rapport au portillon (10) et un bras d'extrémité (202) incliné par rapport au bras principal (204), chaque extrémité du bras d'extrémité (202) étant porteuse d'une came (206, 208) du bras d'articulation (20).

4. Structure arrière de caisse selon l'une quelconque des revendications 1 à 3, dans laquelle la deuxième portion (404) d'un premier chemin de came (40) desdits chemins de came (30, 40) est inclinée par rapport à la première portion (402) du premier chemin de came (40) suivant un angle aigu (α) mesuré dans le sens horaire, la deuxième portion (304) d'un second chemin de came (30) desdits chemins de came (30,40) étant inclinée par rapport à la première portion (302) du second chemin de came (304) suivant le même angle aigu (α) mesuré dans le sens anti-horaire.

5. Structure arrière de caisse selon l'une quelconque des revendications 1 à 4, dans laquelle les chemins de cames (30, 40) sont des rainures et les cames (206, 208) sont des galets ou des roulements coulissants dans les rainures.

6. Structure arrière de caisse selon l'une quelconque des revendications 1 à 5, dans laquelle les chemins de cames (30, 40) s'inscrivent dans un même plan (P).

7. Structure arrière de caisse selon l'une quelconque des revendications 1 à 6, dans laquelle le portillon (10) comporte deux bras d'articulation (20), chaque paroi (6) comportant un moyen de guidage (30, 40) d'un bras d'articulation (20) distinct parmi les deux bras d'articulation (20), les chemins de came (30, 40) du moyen de guidage (15) de chaque paroi (6, 12) étant formés dans une platine (50), les platines (50) de chaque paroi (6, 12) de la structure arrière de caisse étant disposées parallèlement l'une par rapport à l'autre.

8. Structure arrière de caisse selon l'une quelconque des revendications 1 à 7, comportant au moins un équilibreur (60) dont une première extrémité (602) est solidaire de la paroi (6) et une seconde extrémité (604) est solidaire du bras d'articulation (20).

9. Véhicule (2) comportant une structure arrière de caisse selon l'une quelconque des revendications précédentes, le véhicule (2) comportant un plancher (4) bordé par lesdites parois (6, 12) et par ledit portillon (10), le véhicule (2) comportant en outre un panneau de chargement (14) parallèle au plancher (4) et rapporté sur lesdites parois (6, 12), le portillon (10) étant apte à dégager un accès à l'espace (80) entre le panneau de chargement (14) et le plancher (4) par un premier mouvement de translation dans une direction parallèle au plancher (4) puis par un deuxième mouvement amenant le portillon (10) au-dessus d'une surface inférieure du panneau de chargement (14) ou au-dessous d'une surface supérieure du plancher (4).

10. Véhicule (2) selon la revendication précédente, dans lequel le plancher (4) comporte un rail (70) apte à protéger le moyen de guidage (35) et le bras d'articulation (20) de la structure arrière de caisse lors d'un chargement dudit espace.

## Patentansprüche

1. Hintere Karosseriestruktur eines Fahrzeugs (2), wobei die Struktur mindestens aufweist:
- zwei Wände (6, 12), die einander gegenüberliegen und von denen mindestens eine ein Führungsmittel (35) umfasst,
- mindestens einen Gelenkarm (20),
- eine Klappe (10), die durch den Gelenkarm (20) beweglich in Bezug auf die zwei Wände (6, 12) angebracht ist, wobei die Klappe (10) geeignet ist, einen zwischen den Wänden (6, 12) befindlichen Raum (80) zu verschließen,
wobei die Struktur **dadurch gekennzeichnet ist, dass** das Führungsmittel (35) mindestens zwei Nockenbahnen (30, 40) aufweist, wobei der Gelenkarm (20) zwei mit dem Gelenkarm (20) fest verbundene Nocken (206, 208) aufweist, von denen jeder in einer anderen Nockenbahn von den zwei Nockenbahnen (30, 40) angeordnet ist, die zwei Nockenbahnen (30, 40) jeweils einen ersten Abschnitt (402, 302) und einen in Bezug auf den ersten Abschnitt (402, 302) geneigten zweiten Abschnitt (404, 304) aufweisen, die ersten Abschnitte (402, 302) der Nockenbahnen (30, 40) parallel zueinander sind und die zweiten Abschnitte (404, 304) der Nockenbahnen (30, 40) in zueinander entgegengesetzten Richtungen geneigt sind.

2. Hintere Karosseriestruktur nach Anspruch 1, wobei sich die die ersten Abschnitte (402, 302) und die zweiten Abschnitte (404, 304) hauptsächlich entlang von Geradenabschnitten erstrecken.

3. Hintere Karosseriestruktur nach Anspruch 1 oder 2, wobei der Gelenkarm (20) einen Hauptarm (204), der sich orthogonal in Bezug auf die Klappe (10) erstreckt, und einen Endarm (202), der in Bezug auf den Hauptarm (204) geneigt ist, aufweist, wobei jedes Ende des Endarmes (202) einen Nocken (206, 208) des Gelenkarmes (20) trägt.

4. Hintere Karosseriestruktur nach einem der Ansprüche 1 bis 3, wobei der zweite Abschnitt (404) einer ersten Nockenbahn (40) von den Nockenbahnen (30, 40) in Bezug auf den ersten Abschnitt (402) der ersten Nockenbahn (40) um einen im Uhrzeigersinn gemessenen spitzen Winkel (α) geneigt ist, während der zweite Abschnitt (304) einer zweiten Nockenbahn (30) von den Nockenbahnen (30, 40) in Bezug auf den ersten Abschnitt (302) der zweiten Nockenbahn (304) um denselben, gegen den Uhrzeigersinn gemessenen spitzen Winkel (α) geneigt ist.

5. Hintere Karosseriestruktur nach einem der Ansprüche 1 bis 4, wobei die Nockenbahnen (30, 40) Nuten sind und die Nocken (206, 208) Rollen oder Wälzlager sind, die in den Nuten gleiten.

6. Hintere Karosseriestruktur nach einem der Ansprüche 1 bis 5, wobei die Nockenbahnen (30, 40) in derselben Ebene (P) verlaufen.

7. Hintere Karosseriestruktur nach einem der Ansprüche 1 bis 6, wobei die Klappe (10) zwei Gelenkarme (20) aufweist, wobei jede Wand (6) ein Führungsmittel (30, 40) eines anderen Gelenkarmes (20) von den zwei Gelenkarmen (20) aufweist, wobei die Nockenbahnen (30, 40) des Führungsmittels (15) jeder Wand (6, 12) in einer Platte (50) ausgebildet sind, wobei die Platten (50) jeder Wand (6, 12) der hinteren Karosseriestruktur parallel zueinander angeordnet sind.

8. Hintere Karosseriestruktur nach einem der Ansprüche 1 bis 7, welche eine Ausgleichsvorrichtung (60) aufweist, von der ein erstes Ende (602) mit der Wand (6) fest verbunden ist und ein zweites Ende (604) mit dem Gelenkarm (20) fest verbunden ist.

9. Fahrzeug (2), welches eine hintere Karosseriestruktur nach einem der vorhergehenden Ansprüche aufweist, wobei das Fahrzeug (2) einen Boden (4) aufweist, der von den Wänden (6, 12) und von der Klappe (10) umrandet wird, wobei das Fahrzeug (2) außerdem eine Ladungsplatte (14) aufweist, die zu dem Boden (4) parallel und an die Wände (6, 12) angesetzt ist, wobei die Klappe (10) geeignet ist, einen Zugang zu dem Raum (80) zwischen der Ladungsplatte (14) und dem Boden (4) durch eine erste Translationsbewegung in einer zu dem Boden (4) parallelen Richtung und danach durch eine zweite Bewegung, welche die Klappe (10) über eine untere Fläche der Ladungsplatte (14) oder unter eine obere Fläche des Bodens (4) bringt, freizulegen.

10. Fahrzeug (2) nach dem vorhergehenden Anspruch, wobei der Boden (4) eine Schiene (70) aufweist, die geeignet ist, das Führungsmittel (35) und den Gelenkarm (20) der hinteren Karosseriestruktur bei einer Beladung des Raumes zu schützen.

## Claims

1. Rear body structure of a vehicle (2), the structure including at least:
- two walls (6, 12) facing one another, at least one of which comprises a guide means (35),
- at least one articulation arm (20),
- a gate (10) mounted so as to be mobile relative to the two walls (6, 12) by means of the articulation arm (20), the gate (10) being able to close a space (80) between the walls (6, 12),
the structure being **characterized in that** the guide means (35) includes at least two camways (30, 40), the articulation arm (20) including two cams (206, 208) rigidly attached to the articulation arm (20), each arranged in a different camway of the two camways (30, 40), the two camways (30, 40) each including a first portion (402, 302) and a second portion (404, 304) inclined relative to the first portion (402, 302), the first portions (402, 302) of the camways (30, 40) being parallel to one another and the second portions (404, 304) of the camways (30, 40) being inclined relative to one another in opposite directions.

2. Rear body structure according to Claim 1, in which the first portions (402, 302) and the second portions (404, 304) extend mostly along straight line segments.

3. Rear body structure according to Claim 1 or 2, in which the articulation arm (20) includes a main arm (204) extending orthogonally relative to the gate (10) and an end arm (202) inclined relative to the main arm (204), each end of the end arm (202) carrying a cam (206, 208) of the articulation arm (20).

4. Rear body structure according to any one of Claims 1 to 3, in which the second portion (404) of a first camway (40) of said camways (30, 40) is inclined relative to the first portion (402) of the first camway (40) at an acute angle (α) measured in the clockwise direction, the second portion (304) of a second camway (30) of said camways (30, 40) being inclined relative to the first portion (302) of the second camway (304) at the same acute angle (α) measured in the counterclockwise direction.

5. Rear body structure according to any one of Claims 1 to 4, in which the camways (30, 40) are grooves and the cams (206, 208) are rollers or bearings sliding in the grooves.

6. Rear body structure according to any one of Claims 1 to 5, in which the camways (30, 40) are inscribed in the same plane (P).

7. Rear body structure according to any one of Claims 1 to 6, in which the gate (10) includes two articulation arms (20), each wall (6) including a guide means (30, 40) of a separate articulation arm (20) of the two articulation arms (20), the camways (30, 40) of the guide means (15) of each wall (6, 12) being formed in a plate (50), the plates (50) of each wall (6, 12) of the rear body structure being disposed parallel to one another.

8. Rear body structure according to any one of Claims 1 to 7, including at least one balancer (60), a first end (602) of which is rigidly attached to the wall (6) and a second end (604) of which is rigidly attached to the articulation arm (20).

9. Vehicle (2) including a rear body structure according to any one of the preceding claims, the vehicle (2) including a floor (4) flanked by said walls (6, 12) and by said gate (10), the vehicle (2) further including a loading panel (14) parallel to the floor (4) and mounted on said walls (6, 12), the gate (10) being able to free access to the space (80) between the loading panel (14) and the floor (4) by a first movement in translation in a direction parallel to the floor (4) followed by a second movement bringing the gate (10) above a lower surface of the loading panel (14) or below an upper surface of the floor (4).

10. Vehicle (2) according to the preceding claim, in which the floor (4) includes a rail (70) adapted to protect the guide means (35) and the articulation arm (20) of the rear body structure when loading said space.
